## Europäisches Patentamt

## European Patent Office

## Office européen des brevets

(19)

(11) Numéro de publication: **0 072 742**
**B1**

(12) **FASCICULE DE BREVET EUROPEEN**

(45) Date de publication du fascicule du brevet:
**31.01.90**

(51) Int. Cl.⁴: **B 65 D 5/56**

(21) Numéro de dépôt: **82401500.2**

(22) Date de dépôt: **06.08.82**

(54) **Contenant en carton revêtu intérieurement d'une feuille en matière synthétique comprenant des reliefs créés par des fentes du carton dont les bords sont décalés.**

(30) Priorité: **17.08.81 FR 8115794**

(43) Date de publication de la demande:
**23.02.83 Bulletin 83/8**

(45) Mention de la délivrance du brevet:
**31.01.90 Bulletin 90/5**

(84) Etats contractants désignés:
**AT BE CH DE GB IT LI LU NL SE**

(56) Documents cités:
**FR-A- 1 515 445**
**FR-A- 2 404 567**
**US-A- 3 756 495**

(73) Titulaire: **SOCIETE PARISIENNE D'IMPRESSION ET DE CARTONNAGE, 41, avenue de l'Agent Sarre, F-92700 Colombes (FR)**
Titulaire: **BODET, Jean, Augustin, 42, Avenue du Maréchal Douglas Haig, F-78000 Versailles (Yvelines) (FR)**

(72) Inventeur: **Bodet, Jean Augustin, 42, avenue du Maréchal Douglas Haig, F-78000-Versailles Yvelines (FR)**
Inventeur: **Chazal, Guy Albert, 8, rue du 11 Novembre, F-95110-Sannois Val d'Oise (FR)**

(74) Mandataire: **Rataboul, Michel, Cabinet Michel Rataboul 69, rue de Richelieu, F-75002 Paris (FR)**

## Description

On connaît depuis longtemps des contenants composés d'une partie en carton et d'une partie en matière synthétique associées intimement l'une à l'autre afin de profiter à la fois des avantages du carton et des avantages de la matière synthétique.

La partie en carton est constituée par un flan rainé et découpé déterminant les différents éléments du contenant, à savoir un fond, des parois et éventuellement un rebord plan.

Le flan ainsi découpé et rainé est placé dans un moule et, au-dessus de lui, on dispose une feuille en matière synthétique tendue qui est ensuite thermoformée selon une méthode devenue classique.

Lorsque l'opération de thermo-formage est finie, on retire l'emballage terminé et maintenu en forme du fait que la matière synthétique adhère sur toute la surface intérieure du contenant et assure ainsi le maintien en place, dans leur position voulue, de tous les éléments du contenant.

Un tel contenant peut recevoir extérieurement toutes sortes d'impressions quel que soit le procédé utilisé car le flan est imprimé à plat avant découpage et rainage. Simultanément, les faces intérieures en carton sont protégées par la feuille thermoformée en matière synthétique contre les agents agressifs pour le carton tels que les liquides, les graisses végétales ou animales, etc...

En outre, lorsque le contenant est muni d'un rebord plat, celui-ci est recouvert par la feuille en matière synthétique thermoformée. Il est alors possible de fermer le contenant au moyen d'un opercule soudé sur ce rebord de sorte que, finalement, on obtient un contenant étanche particulièrement bien adapté à l'emballage de produits alimentaires.

L'expérience a montré, cependant, qu'un tel contenant se heurte à certaines limites dimensionnelles, notamment lorsque le fond doit être plan car il se produit alors un vrillage ou gauchissement du contenant tout entier qui lui donne un aspect médiocre et qui peut, même, avoir des conséquences pratiques en créant des contraintes sur la soudure de l'opercule ou en donnant au contenant une instabilité nuisible à sa mise sur des rayons de magasins par exemple.

Il y a un problème d'emballage bien connu qui consiste à prévoir des séparations intérieures, soit pour maintenir et caler des objets solides (ampoules de produits pharmaceutiques par exemple), soit pour isoler des produits ne devant pas se mélanger (liquides, aliments de différentes saveurs etc.).

Une solution à ce problème est décrite dans le brevet français N° 76/29 125 du 28.09.1976 et dans son additif N° 77/27.419 du 09.09.1977. Elle consiste à prévoir des ouvertures dans le flan de carton pour que des reliefs du moule de thermoformage puissent traverser ce flan sans le déformer et puissent constituer des formes sur lesquelles la feuille en matière synthétique s'applique sans y adhérer.

En pratique, les reliefs ainsi créés ne sont donc constitués que de matière synthétique et l'épaisseur de la feuille est choisie pour être, à elle seule, suffisamment solide.

Pour permettre une utilisation optimale des qualités du carton d'une part et des qualités de la matière synthétique d'autre part, on a déjà pensé à placer le carton sur deux plans parallèles et décalés selon deux niveaux (bord et fond d'alvéoles) tandis que les parois, sensiblement perpendiculaires à ces plans sont toutes en matière synthétique. Un contenant de ce type est décrit dans le brevet français N° 79/12.155 du 14.05.1979.

La présente invention remédie aux inconvénients de ces contenants, repousse leurs limites et permet de créer des contenants d'un type nouveau, présentant des reliefs intérieurs de formes diverses propices au maintien et à la conservation de certains produits alimentaires très délicats tels que la viande hachée, des produits laitiers, etc.

A cette fin, l'invention a pour objet un contenant du type comprenant une partie en carton obtenue à partir d'un flan prédécoupé et formant un fond, des parois et éventuellement un rebord plan et comprenant aussi une partie en matière synthétique constituée par une feuille appliquée notamment par thermoformage sur la partie en carton, la partie en carton du fond présentant des fentes au droit desquelles se trouve la partie en matière synthétique, lesdites fentes déterminant des parties tenant entre elles, dont les bords adjacents sont décalés hors de leur plan d'origine et sont sensiblement à l'aplomb l'un de l'autre, lesdits bords étant décalés par déformation du carton et immobilisés ainsi par la partie en matière synthétique appliquée sur tout le fond.

Selon d'autres caractéristiques de l'invention:

— les fentes sont disposées de manière régulière pour présenter une symétrie par rapport aux parois et notamment polaire par rapport au centre du contenant;

— les parois du contenant formant des angles entre elles, le fond présente autant de fentes qu'il y a d'angles et chaque fente s'étend perpendiculairement au plan bissecteur virtuel de l'angle considéré;

— chaque fente est prolongée à ses deux extrémités par des fentes qui s'étendent jusqu'au pourtour du fond et de préférence perpendiculairement à ce pourtour;

— chaque portion du fond située entre les fentes et le pourtour du fond est dans le plan théorique que ce fond occuperait naturellement tandis que la portion du fond située au centre est déformée pour se situer au-delà dudit plan théorique;

— le fond présente au moins deux fentes parallèles déterminant au moins une bande;

— la bande est déformée selon plusieurs reliefs longitudinalement espacés les uns des autres;

— le fond présente au moins trois fentes parallèles déterminant au moins deux bandes dont les reliefs sont décalés d'une bande à l'autre;

— les reliefs sont en forme de dos d'âne donnant à chaque bande un profil ondulé;

— le fond comprend des bandes croisées;

— les bandes déterminent entre elles au moins un polygone situé à un niveau différent du leur afin de constituer au moins un creux, soit à l'aplomb des bandes, soit à l'aplomb du ou de chaque polygone;

— les bandes se croisent à angle droit et forment un quadrillage à deux niveaux et raccordés entre eux à la périphérie du fond par des plans inclinés soit rectilignes, soit courbes;

— la matière synthétique est micro-poreuse.

L'invention sera mieux comprise par la description détaillée ci-après faite en référence au dessin annexé. Bien entendu, la description et le dessin ne sont donnés qu'à titre d'exemple indicatif et non limitatif.

— La figure 1 est une vue en plan d'un contenant conforme à l'invention selon un premier mode de réalisation;

— Les figures 2 et 3 sont des vues schématiques partielles en coupe faites respectivement selon les lignes II–III et III–III de la figure 1;

— La figure 4 est une vue d'un flan de carton découpé, rainé et fendu selon un autre mode de réalisation de l'invention.

— La figure 5 est une vue schématique montrant la mise en place du flan de la figure 4 dans un moule pour le thermoformage d'une feuille en matière synthétique;

— La figure 6 est une vue schématique partielle montrant à plus grande échelle le relief obtenu par déformation du carton;

— La figure 7 est une vue schématique montrant en coupe transversale le maintien par la matière synthétique des bords décalés des fentes ménagées dans le fond du contenant;

— La figure 8 est une vue schématique en coupe longitudinale d'un contenant conforme à l'invention operculé et contenant un produit emballé;

— La figure 9 est une vue en plan du même contenant que celui représenté sur la figure 8 mais avant remplissage et operculage;

— La figure 10 est une vue d'un flan de carton découpé, rainé et fendu selon un autre mode de réalisation de l'invention;

— La figure 11 est une vue schématique en coupe d'un contenant mis en forme obtenu à partir du flan de la figure 10;

— Les figures 12 et 13 sont des vues schématiques en perspective montrant l'intérieur et l'extérieur du contenant de la figure 11.

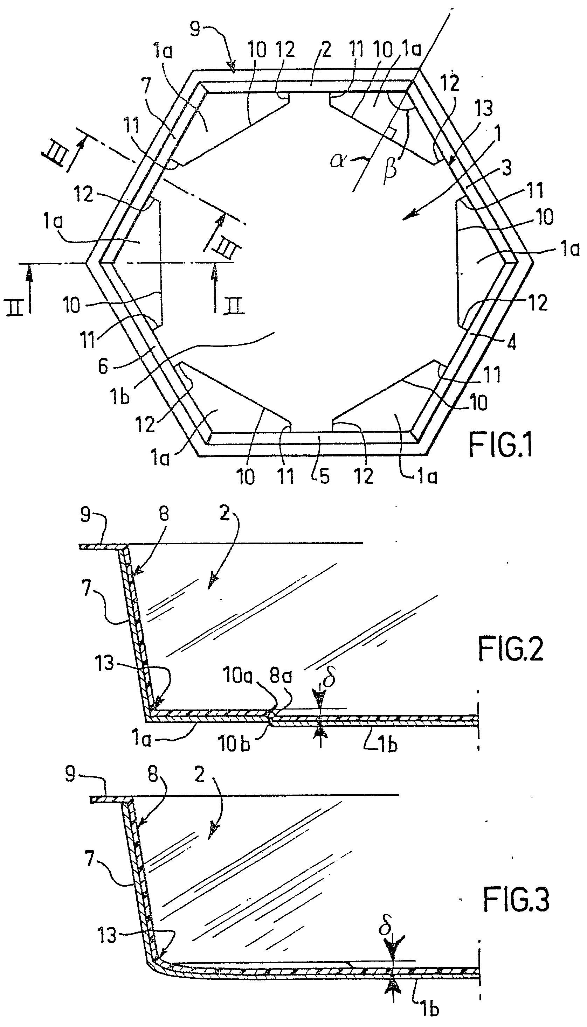

En se reportant aux figures 1 à 3 du dessin, on voit un premier mode de réalisation du contenant qui comprend un fond hexagonal 1 et six parois trapézoïdales 2 à 7.

Lorsque les parois sont redressées par rapport au fond 1, elles forment entre elles un angle de 60° et sont maintenues ainsi, comme cela est connu en soi, par une feuille de matière synthétique thermoformée 8 qui, ici, forme en plus un rebord plan 9.

Conformément à l'invention, le fond en carton 1 présente des fentes 10 en regard de chaque angle formé par les parois entre elles c'est-à-dire que le fond 1 présente autant de fentes 10 qu'il y a d'angles et chaque fente 10 s'étend perpendiculairement au plan bissecteur virtuel $\alpha$ de l'angle $\beta$ considéré.

En outre, chaque fente 10 est prolongée à ses deux extrémités par des fentes 11 et 12 qui s'étendent jusqu'au pourtour 13 du fond 1 et perpendiculairement à ce pourtour 13, ce dernier étant constitué par une ligne de rainage par laquelle les parois 2 et 7 sont reliées au fond 1.

Les lèvres (ou bords) 10a et 10b de chaque fente 10 sont décalés par déformation du carton constituant le fond 1 et sont immobilisées ainsi par la feuille de matière synthétique 8.

A cet effet, lorsque le flan de carton découpé et rainé est placé dans un moule pour le thermoformage de la feuille en matière synthétique, le fond du moule présente des reliefs au droit des portions du fond 1 situées entre les fentes 10, 11, et 12 d'une part et le pourtour 13 d'autre part de sorte qu'au moment où la feuille en matière synthétique atteint le fond 1 par déformation à chaud et sous l'effet d'une pression d'air, elle oblige la partie centrale du fond à s'appliquer contre le fond du moule situé plus bas que ses reliefs.

Ainsi, chaque portion 1a du fond 1 située entre les fentes 10, 11 et 12 d'une part et le pourtour 13 du fond 1 d'autre part est dans le plan théorique que ce fond 1 occuperait naturellement tandis que la portion 1b du fond 1 située au centre est déformée pour se situer au-delà dudit plan théorique sur une distance $\delta$.

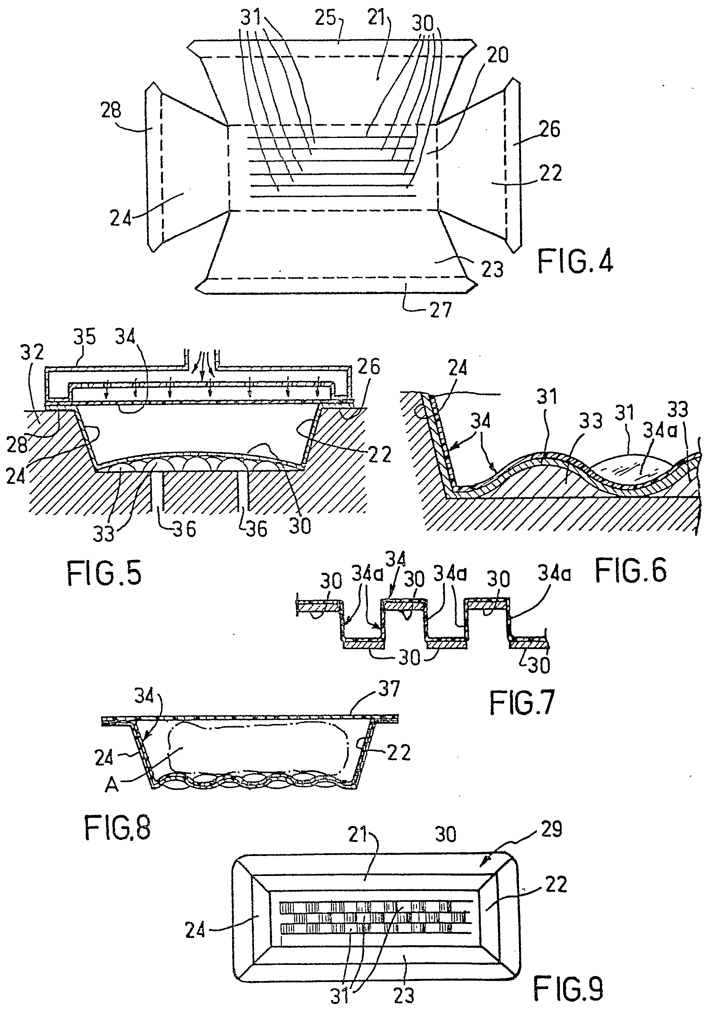

Ces dispositions sont particulièrement visibles sur les figures 2 et 3.

On voit qu'ainsi, au droit de chaque fente 10 se trouve une partie 8a de la feuille en matière synthétique qui s'étend pratiquement perpendiculairement au plan du fond et constitue une sorte de nervure de raidissage qui s'oppose au vrillage, ou gauchissement, du fond.

La distance $\delta$ peut, dans la pratique, être très faible de sorte que le carton se déforme par extension de ses fibres au droit du fond et cette déformation ne se répercute donc pas sur les parois du contenant qui reste parfaitement dans la forme géométrique qu'on lui a donnée.

Les fentes 11 et 12 permettent un débattement plus grand des lèvres 10a et 10b de la fente 10 sans créer d'amorce de rupture et en donnant plus de latitude à l'extension des fibres du carton.

Un contenant ainsi constitué, peut être stocké pendant longtemps avant d'être rempli et operculé sans subir aucune déformation notable. Lorsque ces contenants sont ensuite repris par des machines automatiques en vue de leur remplissage, de leur operculage et, le cas échéant, de la mise sous vide de leur intérieur, aucun incident n'est à craindre du fait de positions aléatoires des contenants, tout particulièrement à l'égard de leur hauteur, contrairement à ce qui aurait pu se produire avec des contenants gauchis.

On note que l'invention procure cette stabilité de forme aux contenants sans aucune dépense supplémentaire ni de carton ni de matière synthétique contrairement à la solution connue jusqu'à ce jour et qui consiste à prévoir un rebord 9 particulièrement épais, car cette surépaisseur conduit à une consommation supplémentaire de matière synthétique et, finalement, ne donne que des résultats décevants.

Selon un autre mode de réalisation de l'invention, le fond du contenant présente au moins deux fentes parallèles déterminant au moins une bande.

Cette bande peut présenter une déformation globale pour obtenir la caractéristique essentielle de l'invention selon laquelle les bords de chaque fente sont décalés.

Mais, selon une variante, la bande est déformée selon plusieurs reliefs longitudinalement espacés les uns des autres.

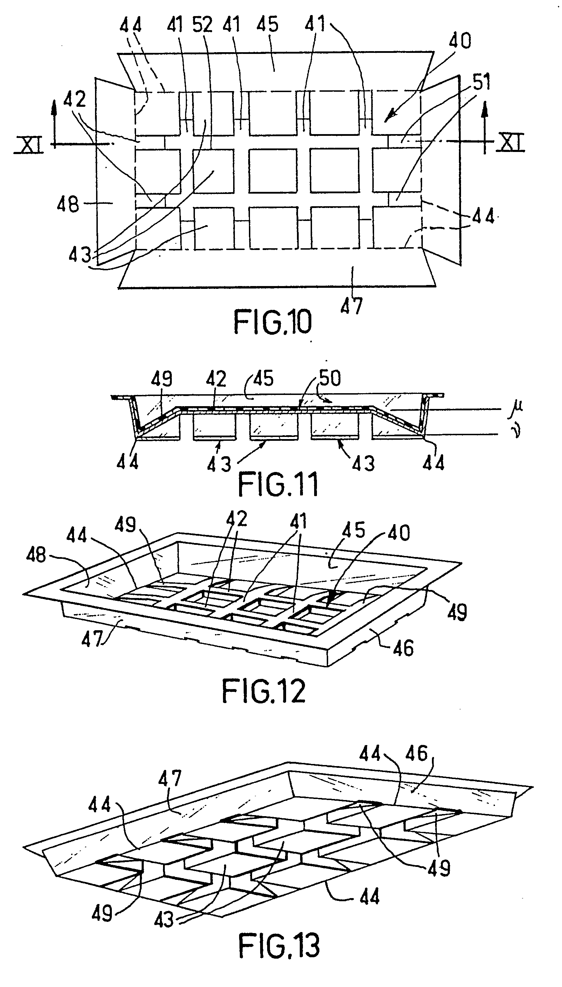

En se reportant aux figures 4 à 9 on voit un mode de réalisation de l'invention selon lequel un contenant est obtenu à partir d'un flan de carton rainé et découpé pour présenter un fond 20 de forme rectangulaire et quatre parois trapézoïdales 21, 22, 23, et 24 terminées par des segments respectivement 25, 26, 27 et 28 devant constituer par juxtaposition bord à bord un rebord plan désigné par la référence générale 29 sur la figure 9.

Le fond 20 présente des fentes parallèles 30 déterminant des bandes 31.

Le flan ainsi découpé et rainé est ensuite placé dans un moule de tout type connu 32 et pour faciliter ce transfert on peut prévoir des «ponts» sur les fentes 30 entre les bandes 31 pour éviter que celles-ci se déforment hors du plan du flan.

Le flan est mis en forme dans le moule 32, par tout moyen connu, et les bandes 31 se déforment globalement en arc de cercle sur des reliefs 33 prévus sur le fond du moule.

Une feuille en matière synthétique thermoformable 34 est tendue au-dessus du flan de carton convenablement mis en forme, puis le moule 32 est fermé au moyen d'un «couvercle» 35, puis de l'air chauffé et comprimé est conduit au-dessus de la feuille 34 pour que celle-ci se déforme ainsi que cela est connu en soi.

Ici, on établit les différents paramètres de l'opération tels que température, pression d'air, épaisseur de la feuille 34, etc. pour permettre à cette feuille 34 de pousser efficacement les bandes 31 afin qu'elles épousent la forme supérieure des reliefs 33, cela étant favorisé par une dépression créée dans des canaux 36 connus en soi et prévus dans le fond du moule 32.

Le décalage des bords des fentes 30 est obtenu grâce au fait que les reliefs 33 sont décalés d'une bande 31 à l'autre.

Ici, on remarque que les reliefs 33 sont en forme de dos d'âne donnant à chaque bande 31 un profil ondulé.

Cet agencement est particulièrement visible sur la figure 6 où l'on voit que les bandes 31 sont toutes ondulées, mais les dos d'âne sont décalés d'une bande à l'autre de sorte que la feuille en matière synthétique 34 présente des faces 34a qui sont sensiblement perpendiculaires au plan théorique du fond ainsi que cela est représenté sur la figure 7.

La forme bombée des reliefs 33 permet au carton de se déformer «en souplesse» par extension de ses fibres tout en créant de très nombreux reliefs et dépressions.

Ces moyens ont pour effet de nervurer énergiquement le fond 20 et d'obtenir un contenant qui est pratiquement indéformable, le tout sans aucune dépense supplémentaire de matière, ainsi que cela a déjà été précisé plus haut.

Mais, en supplément, un tel fond est particulièrement bien adapté à supporter certains produits alimentaires tels que la viande hachée par exemple, du fait que l'air circule facilement sur la quasi-totalité de sa surface tout en maintenant le produit par un grand nombre de points d'appui.

Avec ces dispositions, il peut être avantageux de choisir pour constituer la feuille thermoformable 34 une matière synthétique micro-poreuse.

En effet, la déformation des bandes 31 et le maintien de leurs bords décalés en hauteur permet de créer une communication avec l'extérieur du contenant, au droit des parties 34 de la feuille 34 puisqu'il n'y a pas de carton en regard.

On peut, alors emballer sans inconvénient certains produits laitiers frais par exemple.

Bien entendu, si l'on veut au contraire un emballage tout à fait étanche, on choisira une matière synthétique faisant fonction de barrière.

Dans de cas, bien évidemment, le contenant peut recevoir un opercule tel que celui désigné par la référence 37 sur la figure 8 qui montre, en outre, un produit A reposant sur le sommet des ondulations en carton recouvertes de matière synthétique.

La solidification de la feuille de matière synthétique 34 après thermoformage assure le maintien en place des bandes 31 déformées et les reliefs en dos d'âne qui en résultent ont une grande solidité puisqu'un effort appliqué sur eux de haut en bas se répartit selon le principe bien connu de la voûte.

En se reportant maintenant aux figures 10 à 13, on voit un autre mode de réalisation de l'invention selon lequel le fond 40 comprend des bandes croisées 41 et 42.

Selon la variante représentée, les bandes 41 et 42 déterminent entre elles des polygones 43 situés à un niveau µ différent du leur ʋ afin de constituer des creux à l'aplomb de chaque polygone 43.

Les bandes 41 et les bandes 42 se croisent à angle droit et forment un quadrillage à deux niveaux µ et ʋ raccordés entre eux par des plans inclinés 49 à la périphérie du fond 40 des parois 45, 46, 47, et 48 du contenant.

Sur la figure 11, on voit que chaque bande 41 et chaque bande 42 est plane et surélevée par rapport au plan ʋ dans lequel elles s'étendraient si elles n'avaient pas été déformées «vers le haut» tandis que les carrés 43 sont, eux, au niveau µ de ce que serait le fond d'un contenant analogue de type connu.

Les plans inclinés des bandes 49 peuvent être rectilignes, comme cela est représenté, ou courbes. Dans ce cas comme dans l'autre ils assurent la progressibilité du décalage entre les niveaux µ des carrés 43 et ʋ des bandes 41 et 42.

Afin que les carrés 43 restent solidaires des bandes 41 et 42 jusqu'au thermoformage d'une feuille en matière synthétique 50, les fentes 51 qui déterminent les bandes 41 et 42 sont interrompues sur de très courtes distances pour former des ponts 52, ainsi que cela est connu en soi. Le nombre et la disposition de ces ponts 52 sont laissés à l'appréciation de l'homme de métier qui sait maîtriser ce procédé en fonction de la qualité du carton, des dimensions des polygones, de la largeur des bandes etc.

Le flan de carton peut de la sorte être déplacé sans inconvénient depuis une pile d'attente jusqu'au moule de thermoformage. Il est placé dans le moule par tout moyen connu puis mis en forme soit par un poinçon, soit par la feuille 50 elle-même.

C'est lors de cette opération que les ponts 52 cèdent et provoquent la séparation des polygones 43 du centre qui se placent directement contre le fond du moule, de même que la base des parois 45 à 48, c'est-à-dire les lignes de rainage 44.

Tous les côtés des polygones 43 de la périphérie ne sont pas délimités par des fentes 51 car l'un de ces côtés est formé par une ligne 44. Ces polygones restent par conséquent solidaires des parois et, par elles, des bandes adjacentes.

Dans l'exemple représenté, les bandes 41 et 42 sont en relief et les polygones 43 en creux. Chacun d'eux peut alors constituer un logement pour un objet. Le quadrillage peut aussi constituer un support comme on l'a expliqué en regard des figures 4 à 9.

A l'inverse de ce qui est représenté, il est possible de prévoir les bandes en creux et les polygones en relief, soit à des fins de calage (les bandes font office de logement), soit à des fins de support.

Bien entendu, l'angle selon lequel les bandes se croisent peut être différent de 90° si l'on veut avoir une géométrie en losanges, en hexagones etc.

Selon les dimensions relatives des bandes et des polygones qu'elles déterminent et selon l'importance du décalage qui est établi entre les deux bords d'une même fente, on obtient un véritable compartimentage (figures 10 à 13), un réseau de points d'appuis (figures 4 à 9) ou seulement un nervurage anti-gauchissement (figures 1 à 3). Mais naturellement, l'effet d'anti-gauchissement est obtenu dans tous les cas.

On peut mettre l'invention en œuvre en prévoyant toutes sortes de formes différentes pour le décalage des lèvres des fentes formées par le carton et, cela, en fonction des articles à emballer, de la forme des contenants, des dimensions de ceux-ci, de l'épaisseur et des caractéristiques du carton, de l'épaisseur et des caractéristiques de la feuille en matière synthétique, etc.

**Revendications**

1. Contenant du type comprenant une partie en carton obtenue à partir d'un flan prédécoupé et formant un fond (1–20–40), des parois (2 à 7–21 à 24–45 à 48) et éventuellement un rebord plan (9–29) et comprenant aussi une partie en matière synthétique (8–34–50) constituée par une feuille appliquée notamment par thermoformage sur la partie en carton, la partie en carton du fond (1–20–40) présentant des fentes (10 à 12–30–51) au droit desquelles se trouve la partie en matière synthétique (8–34–50), lesdites fentes (10 à 12–30–51) déterminant des parties (1a et 1b, 31, 41–42 et 43) tenant entre elles, dont les bords adjacents sont décalés hors de leur plan d'origine et sont sensiblement à l'aplomb l'un de l'autre, lesdits bords étant décalés par déformation du carton et immobilisés ainsi par la partie en matière synthétique appliquée sur tout le fond (1–20–40).

2. Contenant selon la revendication 1, caractérisé en ce que les fentes (10 à 12–30–51) sont disposées de manière régulière pour présenter une symétrie par rapport aux parois (2 à 7–21 à 24–45 à 48) et notamment polaire par rapport au centre du contenant.

3. Contenant selon la revendication 2, caractérisé en ce que les parois (2 à 7) du contenant formant des angles (β) entre elles, le fond (1) présente autant de fentes (10) qu'il y a d'angles (β) et chaque fente (10) s'étend perpendiculairement au plan bissecteur virtuel (α) de l'angle (β) considéré.

4. Contenant selon la revendication 3, caractérisé en ce que chaque fente (10) est prolongée à ses deux extrémités par des fentes (11 et 12) qui s'étendent jusqu'au pourtour (13) du fond (1) et de préférence perpendiculairement à ce pourtour (13).

5. Contenant selon la revendication 3, caractérisé en ce que chaque portion (1a) du fond (1) située entre les fentes (10) et le pourtour (13) du fond (1) est dans le plan théorique que ce fond (1) occuperait naturellement tandis que la portion (1b) du fond (1) située au centre est déformée pour se situer au-delà dudit plan théorique.

6. Contenant selon la revendication 1, caractérisé en ce que le fond (20) présente au moins deux fentes parallèles (30) déterminant au moins une bande (31).

7. Contenant selon la revendication 6, caractérisé en ce que la bande (31) est déformée selon plusieurs reliefs longitudinalement espacés les uns des autres.

8. Contenant selon la revendication 7, caractérisé en ce que le fond présente au moins trois fentes (30) parallèles déterminant au moins deux bandes (31) dont les reliefs sont décalés d'une bande (31) à l'autre.

9. Contenant selon la revendication 8, caractérisé en ce que les reliefs sont en forme de dos d'âne donnant à chaque bande un profil ondulé.

10. Contenant selon la revendication 6, caractérisé en ce que le fond (40) comprend des bandes croisées (41 et 42).

11. Contenant selon la revendication 10, caractérisé en ce que les bandes (41 et 42) déterminent entre elles au moins un polygone (43) situé à un niveau (μ) différent du leur (υ) afin de constituer au moins un creux, soit à l'aplomb des bandes (41 et 42), soit à l'aplomb du ou de chaque polygone (43).

12. Contenant selon la revendication 11, caractérisé en ce que les bandes (41 et 42) se croisent à angle droit et forment un quadrillage à deux niveaux (et) raccordés entre eux à la périphérie (44) du fond (40) par des plans inclinés (49) soit rectilignes, soit courbes.

13. Contenant selon la revendication 1, caractérisé en ce que la matière synthétique est microporeuse.

## Claims

1. Container of the type comprising a paper portion obtained by way of a pre-cut blank and forming a base (1–20–40), walls (2 to 7–21 to 24–45 to 48) and, if appropriate, a flat rim (9–29) and also comprising a portion of synthetic material (8–34–50) consisting of a foil applied to the paper portion, in particular by thermoforming, the paper portion of the base (1–20–40) having slits (10 to 12–30–51), to the right of which is disposed the portion of synthetic material, said slits (10 to 12–30–51) defining between one another the portions (1a and 1b, 31, 41–42 and 43), their adjacent sides being set off outside their original plane and being substantially plumb with one another, the said sides being set off by deformation of the paper and fixed in this position by the portion of synthetic material covering the entire base (1–20–40).

2. Container according to claim 1, characterised in that the slits (10 to 12, 30, 51) are arranged in a regular manner, so that they are symmetrical with respect to the walls (2 to 7–21 to 24–45 to 48) and, in particular, polar with respect to the centre of the container.

3. Container according to claim 2, characterised in that the walls (2 to 7) of the container form angles (β) between one another, the base (1) has as many slits (10) as there are angles (β) and each slit (10) extends at right angles to the virtual bisecting plane (α) of the corresponding angle (β).

4. Container according to claim 3, characterised in that each slit (10) is extended at both ends by slits (11 and 12) which extend as far as the periphery (13) of the base (1) and preferably perpendicularly to this periphery (13).

5. Container according to claim 3, characterised in that each portion (1a) of the base (1) situated between the slits (10) and the periphery (13) of the base (1) lies in the normal theoretical plane of this base (1), while the portion (1b) of the base (1) situated in the centre is deformed so that it is situated beyond the said theoretical plane.

6. Container according to claim 1, characterised in that the base (20) has at least two parallel slits (30) defining at least one band (31).

7. Container according to claim 6, characterised in that the band (31) is deformed to provide several longitudinally spaced reliefs.

8. Container according to claim 7, characterised in that the base has at least three parallel slits (30) defining at least two bands (31), the reliefs being set off from one band (31) to the next.

9. Container according to claim 8, characterised in that the reliefs are in form of ridges with sloping sides, giving each of the bands (31) an undulating profile.

10. Container according to claim 6, characterised in that the base (40) comprises crossed bands (41 and 42).

11. Container according to claim 10, characterised in that the bands (41 and 42) define between one another at least one polygon (43) situated at a different level (μ) from the level (υ) in order to form at least one hollow, either plumb with the bands (41 and 42) or plumb with the polygon or polygons (43).

12. Container according to claim 11, characterised in that the bands (41 and 42) intersect at right angles and form a pattern of squares on two levels (μ and υ) connected to one another at the periphery (44) of the base (40) by inclined planes (49) which may be rectilinear or curved.

13. Container according to claim 1, characterised in that the synthetic material is microporous.

## Patentansprüche

1. Behälter mit einem Kartonteil, das aus einem vorgestanzten Zuschnitt erhalten wird und einen Boden (1; 20; 40), Seitenwände (2 bis 7; 21 bis 24; 45 bis 48) und eventuell einen flachen umgebogenen Rand (9; 29) bildet, und einem Teil aus synthetischem Material (8; 34; 50), das von einer insbesondere durch Wärmeformung auf dem Kartonteil befestigten Folie gebildet wird, wobei der den Boden bildende Kartonteil (1; 20; 40) Schlitze (10 bis 12; 30; 51) aufweist, auf deren Oberseite sich das Teil aus synthetischem Material (8; 34; 50) befindet, wobei die Schlitze (10 bis 12; 30; 51) zwischen ihnen befindliche Teile (1a, 1b; 31; 41, 42, 43) bestimmen, deren aneinandergrenzende Ränder über deren ursprüngliche Ebene hinaus versetzt sind und sich genau untereinander befinden, und wobei die Ränder durch Verformung des Kartons versetzt werden und in dieser Lage durch das auf dem gesamten Boden (1; 20; 40) befestigte Teil aus synthetischem Material gehalten werden.

2. Behälter gemäß Anspruch 1, dadurch gekennzeichnet, daß die Schlitze (10 bis 12; 30; 51) regelmäßig angeordnet sind und in bezug auf die Seitenwände (2 bis 7; 21 bis 24; 45 bis 48) eine Symmetrie aufweisen und insbesondere in bezug auf den Mittelpunkt des Behälters polar angeordnet sind.

3. Behälter gemäß Anspruch 2, dadurch gekennzeichnet, daß die Seitenwände (2 bis 7) des Behälters Winkel (β) einschließen, der Boden (1) ebensoviele Schlitze (10) aufweist, wie Winkel (β) vorhanden sind, und jeder Schlitz (10) sich in einer Richtung senkrecht zur gedachten Halbierungsebene (α) des betreffenden Winkels (β) erstreckt.

4. Behälter gemäß Anspruch 3, dadurch gekennzeichnet, daß jeder Schlitz (10) an seinen Enden durch Schlitze (11, 12) verlängert ist, die sich bis zur äußeren Umfangslinie (13) des Bodens (1) und vorzugsweise in einer zu dieser Umfangslinie (13) senkrechten Richtung erstrecken.

5. Behälter gemäß Anspruch 3, dadurch gekennzeichnet, daß jeder zwischen den Schlitzen (10) und dem äußeren Umfang (13) des Bodens (1) angeordnete Abschnitt (1a) des Bodens (1) in einer theoretischen Ebene liegt, die der Boden (1) normalerweise einnehmen würde, während der im Mittelteil angeordnete Abschnitt (1b) des Bodens (1) so verformt ist, daß er jenseits der theoretischen Ebene liegt.

6. Behälter gemäß Anspruch 1, dadurch gekennzeichnet, daß der Boden (20) mindestens zwei parallele Schlitze (30) aufweist, die mindestens einen Streifen (31) festlegen.

7. Behälter gemäß Anspruch 6, dadurch gekennzeichnet, daß der Streifen (31) zu einer Mehrzahl von Reliefs verformt ist, die sich der Länge nach in einem gegenseitigen Abstand befinden.

8. Behälter gemäß Anspruch 7, dadurch gekennzeichnet, daß der Boden mindestens drei parallele Schlitze (30) aufweist, die mindestens zwei Streifen (31) festlegen, deren Reliefs von einem Streifen (31) zum anderen versetzt sind.

9. Behälter gemäß Anspruch 8, dadurch gekennzeichnet, daß die Reliefs kuppenförmig ausgebildet sind und jedem Streifen ein welliges Profil verleihen.

10. Behälter gemäß Anspruch 6, dadurch gekennzeichnet, daß der Boden (40) gekreuzte Streifen (41, 42) aufweist.

11. Behälter gemäß Anspruch 10, dadurch gekennzeichnet, daß die Streifen (41, 42) zwischen ihnen wenigstens ein Polygon (43) bestimmen, das auf einem Niveau ($\mu$) liegt, das vom Niveau der Streifen ($\upsilon$) verschieden ist, damit entweder senkrecht unter den Streifen (41, 42) oder senkrecht unter dem oder jedem Polygon (43) mindestens eine Vertiefung ausgebildet wird.

12. Behälter gemäß Anspruch 11, dadurch gekennzeichnet, daß sich die Streifen (41, 42) rechtwinklig kreuzen und auf zwei Niveaus ein quadratisches Liniennetz bilden, (und) daß die Niveaus an der Umfangslinie (44) des Bodens (40) entweder durch geradlinige oder durch gekrümmte geneigte Flächen (49) verbunden sind.

13. Behälter gemäß Anspruch 1, dadurch gekennzeichnet, daß das synthetische Material mikroporös ist.

FIG.1

FIG.2

FIG.3

FIG.4

FIG.5

FIG.6

FIG.7

FIG.8

FIG.9

FIG.10

FIG.11

FIG.12

FIG.13